# EUROPÄISCHE PATENTSCHRIFT

(11) **EP 0 530 428 B1**
(45) Veröffentlichungstag und Bekanntmachung des Hinweises auf die Patenterteilung: **22.11.1995**
(21) Anmeldenummer: 91810720.2
(22) Anmeldetag: 06.09.1991
(51) Int. Cl.: E01C 5/06

(54) **Verbundstein**
Interlocking brick
Elément de pavé autobloquant

(43) Veröffentlichungstag der Anmeldung: 10.03.1993
(73) Patentinhaber: Scheiwiller, Rolf, CH-6052 Hergiswill (CH); Scheiwiller, René, CH-6052 Hergiswil (CH)
(72) Erfinder: Scheiwiller, René, CH-6052 Hergiswil (CH)
(74) Vertreter: Patentanwälte Eisele, Otten & Roth

(56) Entgegenhaltungen:
- EP-A- 0 424 592
- DE-A- 2 543 287
- DE-A- 2 609 301
- DE-A- 2 610 735

## Beschreibung

Die vorliegende Erfindung betrifft ein Verbundsteinpflaster nach dem Oberbegriff des Anspruchs 1.

Es sind Verbundsteinpflaster verschiedenster Ausführungen bekanntgeworden, wobei im allgemeinen die Verzahnungselemente so geformt sind, daß sie in der verlegten Pflasterung praktisch spielfrei ineinandergreifen, um jede gegenseitige Verschiebung der Steine zu vermeiden (DE-A-2 543 287; US-A-3 947 192). Die Fugen zwischen benachbarten Steinen sind dabei derart eng verlegt, daß sie nicht versandet werden müssen. Nachteilig an solchen Pflastersteinen mit wellenartiger Außenkontur ist es, daß bereits geringe Fertigungstoleranzen, d. h. ein geringer seitlicher Versatz der wellenartigen Außenkontur an einem Stein zu einem diagonalen Driften der Verbundsteine im verlegten Zustand führen, wodurch eine Abweichung von der rechtwinkligen Verlegung gegeben ist. Eine seitliche Verschiebbarkeit der Steine gegeneinander ist aufgrund der spielfreien Verlegungsart nicht gegeben.

Es sind auch Verbundsteine bekanntgeworden, welche zwar spielfrei ineinandergreifende Verzahnungselemente aufweisen (EP-A-0 424 592), die jedoch im verlegten Verband aufgrund vorhandener Abstandsnoppen einen gewissen Abstand zueinander haben. Der so gebildete Abstand kann dann mit einer Versandung ausgeglichen werden. Auch in einem solchen Fall ist eine gegenseitige Bewegung der Steine aufgrund der Spielfreiheit ausgeschlossen.

Der vorliegenden Erfindung liegt die Aufgabe zugrunde, einen Verbundstein für ein Verbundsteinpflaster mit komplementär geformten Verzahnungselementen zu schaffen, der es ermöglicht, Fertigungstoleranzen der insbesondere wellenförmigen Seitenflächen auszugleichen und eine gewisse gegenseitige Verschiebbarkeit der Steine und damit auch ein leichtes gegenseitiges Verkippen der Verbundsteine zu gewährleisten.

Diese Aufgabe wird ausgehend von einem Verbundsteinpflaster nach dem Oberbegriff des Anspruchs 1 durch die kennzeichnenden Merkmale des Anspruchs 1 gelöst.

In den abhängigen Ansprüchen sind vorteilhafte und zweckmäßige Weiterbildungen des unabhängigen Anspruch angegeben.

Die Erfindung wird nun anhand eines in der Zeichnung dargestellten Ausführungsbeispiels näher erläutert.
Fig. 1 ist eine räumliche Darstellung eines Steines,
Fig. 2 zeigt einen Ausschnitt aus einer Pflästerung,
Fig. 3 zeigt eine Seitenansicht eines Teils der Pflästerung.

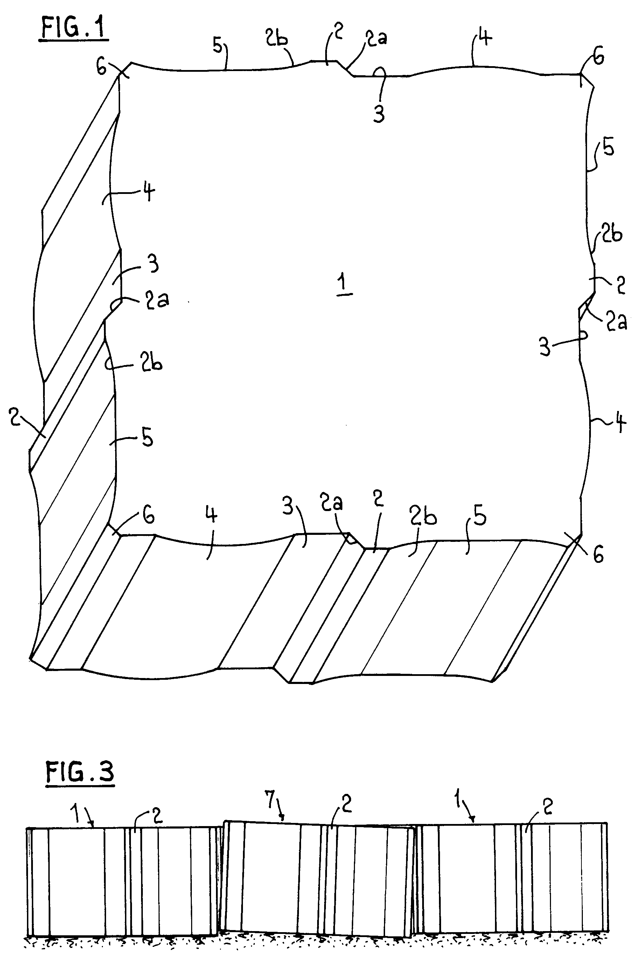

Der in Fig. 1 dargestellte Verbundstein 1 hat im wesentlichen quadratische Form mit vier gleichartig geformten Seitenflächen mit sich zyklisch wiederholenden Verzahnungselementen bzw. Flächenteilen. Jede Seitenfläche weist einen Verriegelungszahn 2 mit einer verhältnismässig steilen Flanke 2a und einer weniger steilen Flanke 2b auf. Auf die steile Flanke 2a des Verriegelungszahns 2 folgt eine Zahnlücke 3 mit ebenem Grund. An diese Zahnlücke 3 schliesst ein konvexer Flächenteil 4 an, dessen Profil gleichmässige Krümmung bzw. Kreisform aufweist. An die flache Flanke 2b des Verriegelungszahns 2 schliesst ein konkaver Flächenteil mit schwach gewölbten Flanken und einem ebenen Mittelteil 5 an. Die Ecken des Steines sind als Zähne 6 mit relativ schwach geneigten Flanken ausgebildet. Wie erwähnt wiederholen sich die Teile 2 bis 5 der Seitenflächen zyklisch an allen vier Seiten des Steines.

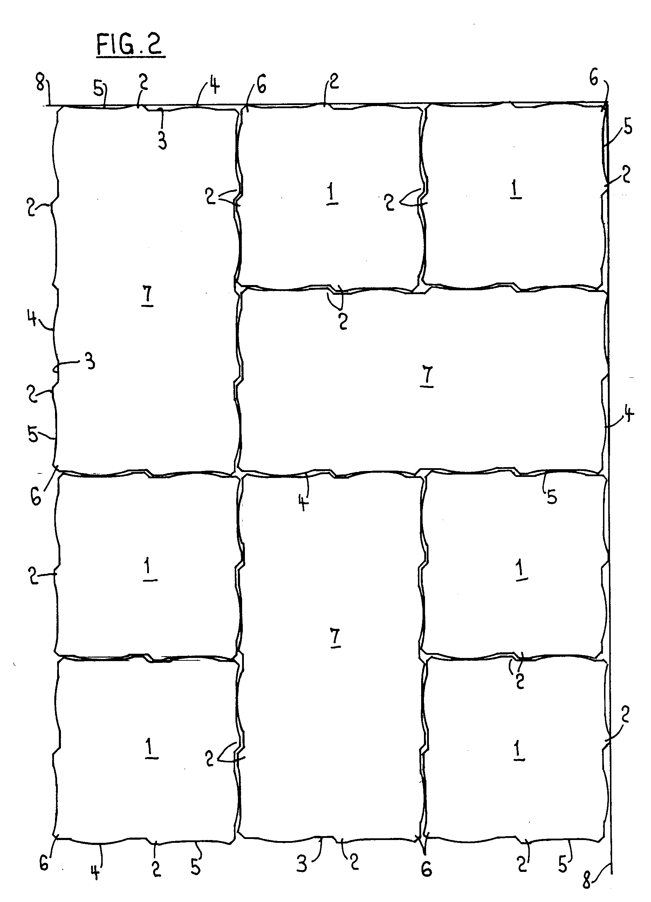

Wie Fig. 2 zeigt, können abgesehen von den quadratischen Steinen 1 gemäss Fig. 1 rechteckige Steine 7 vorgesehen sein. Diese rechteckigen Steine sind an den Breitseiten gleich geformt wie die quadratischen Steine, und an den Längsseiten wiederholt sich die gleiche Gruppe von Verzahnungselementen hintereinander zweimal. Fig. 2 zeigt, wie aneinanderliegende Steine mit geringem Spiel ineinandergreifen, wobei sich nur jeweils die konvexen Flächenteile 4 und der ebene Mittelteil 5 längs einer Linie berühren und damit den gegenseitigen Abstand der Steine eindeutig bestimmen, während die Verriegelungszähne 2 mit etwas Spiel in die Lücken 3 greifen. Auch die Lage der Randsteine, welche an eine in Fig. 2 durch die Linie 8 angedeutete Umrandung anstossen, ist eindeutig bestimmt durch das Anliegen zweier höchster Stellen der Seitenflächen, nämlich eines Verriegelungszahnes 2 und des an den konkaven Flächenteil 5 anschliessenden Eckzahnes 6. Trotz des geringen Spiels, das zwischen den Verriegelungszähnen 2 und den Zahnlücken 3 besteht, sind die Steine genügend gegen gegenseitige Verschiebung oder Verdrehung gesichert. Dank des vorhandenen Spiels und der Linienberührung zwischen benachbarten Steinen verbleibt aber eine gewisse Beweglichkeit, insbesondere können einzelne Steine gegenüber den benachbarten Steinen leicht verkippt werden, wie in Fig. 3 angedeutet. Das erwähnte Spiel zwischen benachbarten, verlegten Steinen üblicher Grösse kann beispielsweise etwa 1 mm betragen, während die Niveaudifferenz zwischen den höchsten und tiefsten Stellen der Seitenflächen beispielsweise etwa 4 mm betragen kann. Die erwähnte Beweglichkeit der Steine ermöglicht das Verlegen von Pflästerungen über unebene Stellen, z.B. am Uebergang von einem horizontalen Vorplatz zu einer geneigten Garageeinfahrt.

Ausser den dargestellten Steinen können Steine anderer Form und Grösse, z.B. quadratische Steine doppelter oder dreifacher Seitenlänge, Winkelsteine oder S-Steine vorgesehen sein, wenn nur die Seitenflächen je mindestens eine Gruppe von Verzahnungselementen 2 bis 5 aufweisen.

## Patentansprüche

1. Verbundsteinpflaster mit einem Verbundstein, der an gegenüberliegenden ebenen Seitenflächen mit komplementär geformten Verzahnungselementen versehen ist, die in benachbarter Anordnung der Verbundsteine ineinandergreifen, wobei jede Seitenfläche wenigstens einen Verriegelungszahn (2) aufweist, der in eine zugehörige Zahnlücke (3) des angrenzenden Verbundsteins eingreift und wobei seitlich hiervon ein konvex gewölbter Seitenflächenabschnitt (4) sowie ein konkav gewölbter Seitenflächenabschnitt (5) vorgesehen ist, dadurch gekennzeichnet, daß aneinandergrenzende Verbundsteine mit geringem Spiel ineinandergreifen, wobei die Zahnlücke (3) und der konkave Seitenflächenabschnitt (5) ebene Flächenteile aufweisen, an denen der Verriegelungszahn (2) bzw. der konvexe Seitenflächenabschnitt (4) in Verbund seitlich verschiebbar sind.

2. Verbundsteinpflaster nach Anspruch 1, dadurch gekennzeichnet, daß die Kopffläche des Verriegelungszahns (2) und der Grund der Zahnlücke (3) mindestens annähernd eben sind.

3. Verbundsteinpflaster nach Anspruch 1 oder 2, dadurch gekennzeichnet, daß an jeder Seitenfläche mindestens einmal eine Gruppe von Verzahnungselementen geformt ist, die aufeinanderfolgend einen konvex gewölbten Teil (4), eine vertiefte Stelle oder Lücke (3), einen Zahn (2) und einen konkaven Teil (5) umfaßt.

4. Verbundsteinpflaster nach Anspruch 1 oder 3, dadurch gekennzeichnet, daß der konvex gewölbte Teil (4) ein gleichmäßig gekrümmtes, z. B. kreisförmiges Profil und der konkave Teil (5) ein ebenes Mittelteil aufweist.

5. Verbundsteinpflaster nach Anspruch 1, dadurch gekennzeichnet, daß die seitlichen Kanten des Verbundsteins als Eckzahn (6) zwischen einem konvexen (4) und einem konkaven Teil (5) geformt sind.

6. Verbundsteinpflaster nach einem der vorhergehenden Ansprüche, dadurch gekennzeichnet, daß der Verriegelungszahn (2) Flanken (2a, 2b) unterschiedlicher Steilheit aufweist.

7. Verbundsteinpflaster nach Anspruch 6, dadurch gekennzeichnet, daß die steilere Zahnflanke (2a) an die Zahnlücke (3) der Seitenfläche anschließt.

## Claims

1. Composite stone paving with a composite paving stone which on the flat facing side surfaces is provided with complementary tooth elements, which connect together when the composite paving stones are adjacent to one another, whereby each side surface has at least one locking tooth (2) which engages with a tooth gap (3) on the adjacent composite paving stone and whereby to the side thereof a convex curved side surface section (4) and a concave curved side surface section (5) are provided, characterised in that the composite paving stones bordering each other engage with each other with little play, whereby the tooth gap (3) and the concave side surface section (5) have flat surface sections at which the locking tooth (2) or the convex side surface section (4) can be slid from the side to form a connection.

2. Composite stone paving according to claim 1, characterised in that the head surface of the locking tooth (2) and the base of the tooth gap (3) are at least approximately flat.

3. Composite stone paving according to claim 1 or 2, characterised in that a group of tooth elements is formed on each side surface at least once which comprises in sequence a convex curved section (4), a depressed point or gap (3), a tooth (2) and a concave section (5).

4. Composite stone paving according to claim 1 or 3, characterised in that the convex curved section (4) has an evenly curved, e.g. circular profile and the concave section (5) a flat middle section.

5. Composite stone paving according to claim 1, characterised in that the side edges of the paving stone are formed as a corner stone (6) between a convex (4) and a concave section (5).

6. Composite stone paving according to one of the preceding claims, characterised in that the locking tooth (2) has sides (2a, 2b) of different steepness.

7. Composite stone paving according to claim 6, characterised in that the steeper tooth side (2a) adjoins the tooth gap (3) of the side surface.

## Revendications

1. Pavé à pierres d'assemblage avec une pierre d'assemblage qui est munie, sur des faces latérales planes opposées, d'éléments d'engrènement formés de façon complémentaire, qui agissent les uns dans les autres dans un agencement adjacent de pierres d'assemblage, chaque face latérale comportant au moins une dent de verrouillage (2) qui agit dans un vide denté associé (3) de la pierre d'assemblage contigüe, et un tronçon de face latérale (4) cintré de façon convexe, ainsi qu'un tronçon de face latérale (5) cintré de façon concave étant prévus latéralement à ceci,
caractérisé en ce que des pierres d'assemblage contigües agissent les unes dans les autres avec un faible jeu, le vide denté (3) et le tronçon de face latérale concave (5) présentant des parties de faces planes, sur lesquelles la dent de verrouillage (2) et le tronçon de face latérale convexe (4) en assemblage peuvent être déplacés latéralement.

2. Pavé à pierres d'assemblage selon la revendication 1,
caractérisé en ce que la face de tête de la dent de verrouillage (2) et le fond du vide denté (3) sont au moins à peu près plans.

3. Pavé à pierres d'assemblage selon l'une des revendications 1 ou 2,
caractérisé en ce que sur chaque face latérale, est formé au moins une fois un groupe d'éléments d'engrènement, qui entoure successivement une partie (4) cintrée de façon convexe, une zone approfondie ou un vide (3), une dent (2) et une partie concave (5).

4. Pavé à pierres d'assemblage selon l'une des revendications 1 ou 3,
caractérisé en ce que la partie (4) cintrée de façon convexe présente un profilé courbé de façon uniforme, par exemple de forme circulaire, et la partie concave (5) présente une partie centrale plane.

5. Pavé à pierres d'assemblage selon la revendication 1,
caractérisé en ce que les bords latéraux de la pierre d'assemblage sont formés sous forme d'une dent de coin (6) entre une partie convexe (4) et une partie concave (5).

6. Pavé à pierres d'assemblage selon l'une des revendications précédentes,
caractérisé en ce que la dent de verrouillage (2) présente des flancs (2a,2b) de pentes différentes.

7. Pavé à pierres d'assemblage selon la revendication 6,
caractérisé en ce que le flanc de dent (2a) de plus grande pente est raccordé au vide denté (3) de la face latérale.
